# EUROPEAN PATENT APPLICATION

(11) **EP 4 245 446 A1**
(43) Date of publication of application: **20.09.2023**
(21) Application number: 22315064.0
(22) Date of filing: 15.03.2022
(51) Int. Cl.: B23C 5/06, B23C 5/20, B23P 9/02, B24B 39/00

(54) **FACE MILLING CUTTER**

(71) Applicant: Seco Tools AB, 737 82 Fagersta (SE)
(72) Inventor: Msaoubi, Rachid, 737 82 FAGERSTA (SE); Auzenat, François, 737 82 FAGERSTA (SE)
(74) Representative: Sandvik

(57) **Abstract**

A face milling cutter (1) comprising:
- a tool body (2);
- at least two cutting inserts (20) for forming a milled flat surface on a workpiece and mounted in a respective insert seat (10) in the tool body, each cutting insert having a secondary cutting edge (22) that constitutes the axially foremost cutting edge of the cutting insert; and
- several burnishing assemblies (30) with a respective springloaded burnishing element (31) arranged in the tool body.

The number of the burnishing assemblies (30) in the tool body (2) is the same as the number of insert seats (10), wherein the insert seats and the burnishing assemblies are alternately arranged in the circumferential direction of the tool body such that each one of the insert seats (10) is followed by an associated one of the burnishing assemblies (30) as seen in the intended direction of rotation of the tool body.

## Description

### FIELD OF THE INVENTION AND PRIOR ART

The present invention relates to a face milling cutter according to the preamble of claim 1.

A face milling cutter is a rotating cutting tool used for performing face milling operations on a workpiece. In a face milling operation, a flat surface is cut perpendicular to the longitudinal centre axis of the tool body of the face milling cutter. A face milling cutter may be provided with several cutting inserts detachably mounted in a respective insert seat in the tool body of the face milling cutter. Each individual cutting insert may be provided with several identical cutting edges, to thereby allow each cutting insert to be turned into different working positions. When a cutting edge of a cutting insert has been worn out, the cutting insert may be repositioned in its insert seat and mounted in a new working position with another cutting edge in an active cutting position.

Some applications, for instance within the aeronautic, aerospace and energy industries, require components of durable and heat resistant metallic materials, such as titanium, tungsten, tantalum, nickel, molybdenum, stainless steel, 602A alloy or the similar. When a surface on a workpiece, for instance of such a difficult-to-cut material, is subjected to face milling in order to produce a component for a critical application, for instance within the aeronautic, aerospace or energy industry, the milled surface needs to be subjected to mechanical surface treatment in order to reduce residual stresses and improve surface finish, to thereby improve the surface integrity and the fatigue strength of the final component. In such a situation, the mechanical surface treatment is normally effected in a subsequent step and with a separate burnishing tool after the face milling operation, which implies increased production time and increased production cost. In order to reduce the production time and the production cost, it would be favourable to effect the face milling and the mechanical surface treatment in the same operation and with one and the same tool.

A face milling cutter capable of effecting face milling and mechanical surface treatment in one and the same operation is previously known from CN 112589170 A. This previously known face milling cutter is provided with several cutting inserts for face milling of a surface on a workpiece, wherein burnishing assemblies with spring-loaded burnishing elements are arranged between some of the cutting inserts in order to subject the milled surface to mechanical surface treatment under the effect of the burnishing elements.

### OBJECT OF THE INVENTION

The object of the present invention is to provide a face milling cutter of the above-mentioned type that has a new and favourable design.

### SUMMARY OF THE INVENTION

According to the invention, said object is achieved by means of a face milling cutter having the features defined in claim 1.

The face milling cutter according to the invention comprises:
- a tool body having a front end and an opposite rear end, the rear end being configured for attachment to a machine, wherein a longitudinal centre axis of the tool body extends between the rear end and the front end of the tool body;
- at least two cutting inserts for forming a milled flat surface on a workpiece;
- at least two insert seats provided in the tool body and distributed in the circumferential direction of the tool body, the at least two insert seats being configured to accommodate a respective one of the at least two cutting inserts, wherein each cutting insert of the at least two cutting inserts, when mounted in the associated insert seat, has a secondary cutting edge that constitutes the axially foremost cutting edge of the cutting insert, as seen in a reference direction D1 from the rear end of the tool body towards the front end of the tool body in parallel with the centre axis of the tool body; and

- several burnishing assemblies arranged in the tool body, each burnishing assembly comprising:
   - a burnishing element, which is partly received in a chamber of the burnishing assembly and has an outwardly bulging end part that projects from the chamber and forwards from the tool body as seen in said reference direction D1, wherein this end part ends in a rounded tip that constitutes the axially foremost point of the burnishing element as seen in said reference direction D1; and
   - a spring unit provided in said chamber, wherein the burnishing element against the action of a spring force from the spring unit is moveable inwards in the chamber in a direction opposite to said reference direction D1 from an advanced position, in which the burnishing element rests against a dedicated seat in the chamber and in which said end part of the burnishing element projects in said reference direction D1 beyond a reference plane that extends perpendicularly to the centre axis of the tool body and contains or substantially contains an axially foremost point of the secondary cutting edge of each one of the at least two cutting inserts, to a retracted position, in which said tip of the burnishing element is on a level with said reference plane.

Due to manufacturing tolerances of the insert seats and the cutting inserts, there may be very small differences in the precise axial position of the axially foremost point of the secondary cutting edge of the different cutting inserts. Thus, the axially foremost points of the secondary cutting edges of all cutting inserts are normally not located exactly in the same plane. Therefore, the above-mentioned reference plane here refers an imaginary plane that extends perpendicularly to the centre axis of the tool body and contains the axially foremost points of the secondary cutting edges of the at least two cutting inserts within the manufacturing tolerances of the insert seats and the cutting inserts.

According to the invention, the number of the several burnishing assemblies in the tool body is the same as the number of the at least two insert seats, wherein the at least two insert seats and the several burnishing assemblies are alternately arranged in the circumferential direction of the tool body such that each one of the insert seats is followed by an associated one of the burnishing assemblies as seen in the intended direction of rotation of the tool body. This arrangement of the burnishing assemblies and the insert seats implies that each one of the cutting inserts of the face milling cutter is followed by an associated burnishing assembly, as seen in the direction of rotation of the tool body, such that the surface area on a workpiece smoothed by the secondary cutting edge of an individual cutting insert may almost instantly be subjected to mechanical surface treatment under the effect of the burnishing element of the associated burnishing assembly. This quasi-simultaneous surface smoothing and mechanical surface treatment makes it possible to achieve excellent surface finishing and very stable residual stresses of the milled surface, due to the fact that almost all the heat generated in a surface area on a workpiece by the secondary cutting edge of an individual cutting insert still remains in the surface area when the surface area is subsequently subjected to mechanical surface treatment under the effect of the burnishing element of the associated burnishing assembly. The residual stress stability of a milled surface area on a workpiece is increased if the surface area is still hot when subjected to mechanical surface treatment by a burnishing element. With the face milling cutter of the present invention, there is substantially no time for a surface area smoothed by the secondary cutting edge of an individual cutting insert to lose any heat before being subjected to mechanical surface treatment by the burnishing element of the burnishing assembly associated with the cutting insert in question.

According to an embodiment of the invention:
- each cutting insert of said at least two cutting inserts comprises:
   - a rake face and an abutment face arranged on opposite sides of the cutting insert, wherein the cutting insert when mounted in the associated insert seat is configured to abut against a tangential support surface in the insert seat via the abutment face,
   - a peripheral surface extending around the cutting insert between the rake face and the abutment face, and
   - a substantially circular or substantially arc-shaped cutting edge formed at an intersection between the peripheral surface and the rake face, wherein said secondary cutting edge of the cutting insert forms part of this substantially circular or substantially arc-shaped cutting edge; and
- said end part of the burnishing element of each burnishing assembly has a spherical shape with a radius of curvature substantially equal to or smaller than a radius of the substantially circular or substantially arc-shaped cutting edge of the cutting inserts.

By using cutting inserts and burnishing elements with such shapes, it can easily be ensured, by appropriate positioning of the burnishing elements in relation to the cutting inserts, that a burnishing element is prevented from making contact with the surface area on a workpiece that has just been formed by the primary cutting edge of the associated cutting insert, i.e. by the primary cutting edge of the cutting insert located immediately in front of the burnishing element as seen in the direction of rotation of the tool body, such that a local hardening of a surface area formed by the primary cutting edge of a cutting insert is avoided before the primary cutting edge of the next cutting insert cuts into this surface area. In this way, the burnishing element is prevented from hardening the portion of the workpiece material that will be removed by the primary cutting edge of the next cutting insert. Hereby, better tool life of the cutting inserts is achieved.

According to another embodiment of the invention, said at least two cutting inserts are all positioned with the axially foremost point of the secondary cutting edge at the substantially same radial distance from the centre axis of the tool body, wherein the axially foremost point of the burnishing element of each burnishing assembly is located closer to the centre axis of the tool body than the axially foremost point of the secondary cutting edge of each cutting insert such that there is a radial distance Δr between the axially foremost point of the burnishing element of each burnishing assembly and the axially foremost point of the secondary cutting edge of each cutting insert. By suitable choice of said radial distance Δr, while taking the expected feed per tooth for the face milling cutter into account, it will be possible to ensure that the tip of a burnishing element will move along a path as close as possible to the path of the axially foremost point of the secondary cutting edge of the associated cutting insert, to thereby ensure that a surface area smoothed by the secondary cutting edge of a cutting insert remains as hot as possible when being hit by the tip of the burnishing element of the burnishing assembly associated with the cutting insert in question.

Said at least two insert seats are preferably evenly or at least substantially evenly distributed about the centre axis of the tool body, and the burnishing elements of said several burnishing assemblies are preferably evenly or at least substantially evenly distributed about the centre axis of the tool body. In this case, the above-mentioned radial distance Δr between the axially foremost point of the burnishing element of each burnishing assembly and the axially foremost point of the secondary cutting edge of each cutting insert is with advantage so chosen that the following condition is fulfilled: 0 < Δr ≤ f_{z}^{max}·(δ₂/δ₁), where:
- f_{z}^{max} is the recommended maximum feed per tooth for the face milling cutter,
- δ₁ is the angular distance, as seen from the centre axis of the tool body, between the axially foremost point of the secondary cutting edge of every two consecutive cutting inserts of said at least two cutting inserts, and
- δ₂ is the angular distance, as seen from the centre axis of the tool body, between the axially foremost point of the secondary cutting edge of each cutting insert and the axially foremost point of the burnishing element of the burnishing assembly located directly after the cutting insert as seen in the intended direction of rotation of the tool body.

According to a preferred alternative, the radial distance Δr is so chosen that the following condition is fulfilled: f_{z}^{min}·(δ₂/δ₁) ≤ Δr ≤ f_{z}^{min}·(δ₂/δ₁), where f_{z}^{min} is the recommended minimum feed per tooth for the face milling cutter, and where f_{z}^{max}, δ₁ and δ₂ are as defined above.

In the above-mentioned cases, f_{z}^{max} represents the recommended maximum feed per tooth for the face milling cutter when equipped with cutting inserts having the strongest type of geometry, i.e. the so-called H geometry (Heavy geometry).

According to a further alternative, the radial distance Δr is so chosen that the following condition is fulfilled: 0.05·(δ₂/δ₁) mm ≤ Δr ≤ 0.05·(δ₂/δ₁) mm, where δ₁ and δ₂ are as defined above.

In every plane that is parallel with the above-mentioned reference plane and intersects said end part of the burnishing element of each burnishing assembly, there is a radial distance Δr' between a radially outermost point of the burnishing element of each burnishing assembly and a radially outermost point of each cutting insert. The burnishing elements and the cutting inserts are preferably so designed and so positioned in relation to each other that Δr'≥Δr in each such plane as seen when the burnishing element of each burnishing assembly is in said retracted position. It can hereby be ensured that a burnishing element is prevented from making contact with the surface area on a workpiece that has just been formed by the primary cutting edge of the associated cutting insert, i.e. by the primary cutting edge of the cutting insert located immediately in front of the burnishing element as seen in the direction of rotation of the tool body, such that a local hardening of a surface area formed by the primary cutting edge of a cutting insert is avoided before the primary cutting edge of the next cutting insert cuts into this surface area. In this way, the burnishing element is prevented from hardening the portion of the workpiece material that will be removed by the primary cutting edge of the next cutting insert. Hereby, better tool life of the cutting inserts is achieved.

According, to another embodiment of the invention, the burnishing element of each burnishing assembly is spherical. In this case, the burnishing element may rotatably rests against a burnishing element seat in a support member that is slidably received in the chamber of the associated burnishing assembly. Hereby, the burnishing elements may rotate on the workpiece surface that is being subjected to face milling by the face milling cutter, which is favourable with respect to the mechanical surface treatment achieved by the burnishing elements. In order to facilitate the rotation of the burnishing element, each burnishing element seat preferably has a concave shape adapted to the spherical shape of the associated burnishing element.

According to another embodiment of the invention, the spring unit of each burnishing assembly is fitted between the support member of the burnishing assembly and a stop member of the burnishing assembly, wherein the stop member has an external thread that is in threaded engagement with an internal thread in a hole connected to the chamber of the burnishing assembly. Hereby, the spring force acting on the burnishing element of a burnishing assembly, and thereby the pressure exerted by the burnishing element on the workpiece surface that is being subjected to face milling by the face milling cutter, may easily be adjusted by adjustment of the position of the stop member. The spring unit of each burnishing assembly may be formed by a stack of disc springs.

According to another embodiment of the invention, the number of said insert seats in the tool body is three or more, preferably four or more.

Further advantageous features of the face milling cutter according to the present invention will appear from the description following below.

The invention also relates to a method for face milling of a workpiece, wherein the face milling of the workpiece is carried out by means of a face milling cutter of the type described above. This method is particularly suitable for face milling of a workpiece of heat resistant material, such as titanium or its alloys (e.g. Ti-6-4, Ti6242, Ti6246, Ti 10-2-3, Ti5553, etc.), high strength steel (e.g. 4340, A300M etc.), Inconel 718, Waspaloy, martensitic stainless steel (e.g. 15.5 PH, 17.4 PH, etc), tantalum or its alloys, nickel or its alloys, molybdenum or its alloys, chromium molybdenum alloys, stainless steel, 602A alloy or the similar. Such a workpiece is for instance an aeronautic or aerospace component (e.g. landing gear beams, thrust fittings, pylon brackets, engine mounts, etc.) or a component for energy industries.

### BRIEF DESCRIPTION OF THE DRAWINGS

With reference to the appended drawings, a specific description of embodiments of the invention cited as examples follows below. In the drawings:
- Fig 1: is a perspective view of a face milling cutter according to an embodiment of the present invention,
- Fig 2: is a lateral view of the face milling cutter of Fig 1,
- Fig 3: is a partly exploded perspective view of the face milling cutter of Fig 1,
- Figs 4a and 4b: are front views of the face milling cutter of Fig 1,
- Fig 5a: is a cut according to the line V-V in Fig 4a, as seen with the burnishing elements in an advanced position,
- Fig 5b: is a cut according to the line V-V in Fig 4a, as seen with the burnishing elements in a retracted position,
- Fig 6a: is a cut according to the line VI-VI in Fig 4a, as seen with the burnishing elements in an advanced position,
- Fig 6b: is a cut according to the line VI-VI in Fig 4a, as seen with the burnishing elements in a retracted position,
- Figs 7a and 7b: are perspective views from different directions of a cutting insert included in the face milling cutter of Fig 1,
- Fig 7c: is a later view of the cutting insert of Figs 7a and 7b,
- Fig 7d: is a planar view of the cutting insert of Figs 7a and 7b,
- Fig 7e: is a cut according to the line VIIe-VIIe in Fig 7d,
- Fig 8: is a schematic representation of a cutting insert and a burnishing element illustrating the radial positions thereof in a tool body of a face milling cutter according to the invention, and
- Fig 9: is a schematic illustration of a section of a path on a workpiece for an axially foremost point of a secondary cutting edge of a cutting insert included in a face milling cutter according to the invention and a section of a path on the workpiece for a tip of a burnishing element included in a burnishing assembly associated with the cutting insert.

### DETAILED DESCRIPTION OF EMBODIMENTS OF THE INVENTION

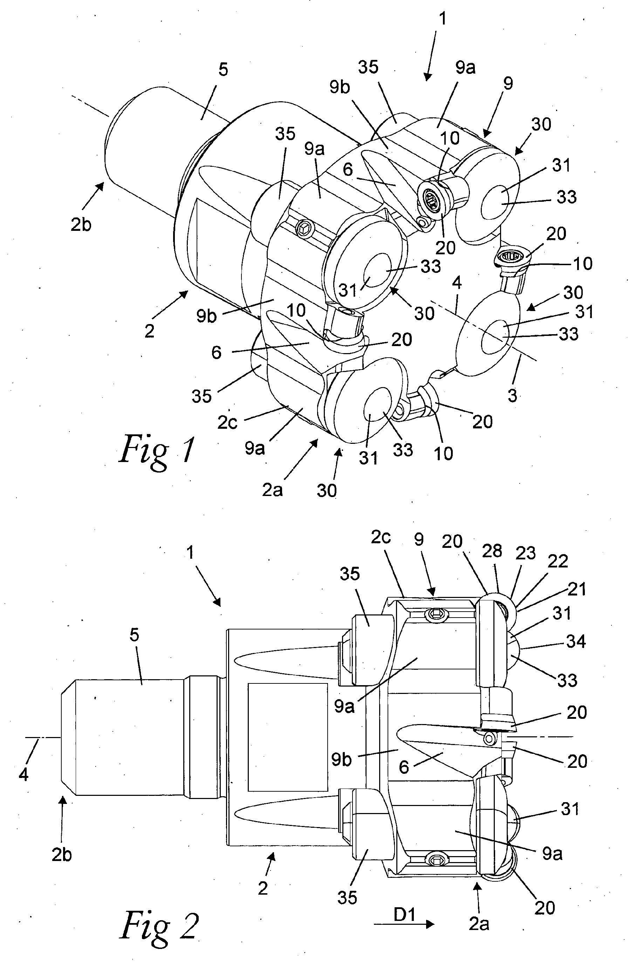

An embodiment of a face milling cutter 1 according to the present invention is illustrated in Figs 1-6. The face milling cutter 1 comprises an elongated tool body 2 and is configured to be rotated about an axis of rotation 3. The tool body 2 has a front end 2a and an opposite rear end 2b. A longitudinal centre axis 4 of the tool body 2 extends between the rear end 2b and the front end 2a of the tool body, wherein this centre axis 4 coincides with the axis of rotation 3 of the face milling cutter 1. A rear part of the tool body 2 forms a connection member 5, through which the tool body 2 is mountable, directly or via an intermediate tool holder, to a rotating spindle or the similar of a machine, for instance a milling machine or a drilling machine. A front part 2c of the tool body 2 is provided with several insert seats 10, which are evenly or at least substantially evenly distributed in the circumferential direction of the tool body 2 and configured to receive a respective cutting insert 20. Thus, the insert seats 10, and also the cutting inserts 20, are evenly or at least substantially evenly distributed about the centre axis 4 of the tool body 2. Each insert seat 10 is open towards the front end 2a of the tool body 2 in order to allow a cutting insert 20 mounted in the insert seat to project in the axial direction of the tool body 2 beyond the front end 2a thereof. A chip pocket 6 is provided in the tool body 2 in front of each insert seat 10 as seen in the intended direction of rotation R of the tool body 2.

In the embodiment illustrated in Figs 1-6, the tool body 2 is provided with four insert seats 10 spaced apart in the circumferential direction of the tool body. However, the tool body 2 may as an alternative, inter alia depending on the diameter of the tool body, be provided with any other suitable number of insert seats 10, as long as they are more than two in number. A smaller diameter tool body may for instance be provided with two or three insert seats 10, whereas a larger diameter tool body may be provided with more than four insert seats 10. Each cutting insert 20 is configured to be detachably mounted in its associated insert seat 10.

The insert seats 10 are arranged in level with each other as seen in the axial direction of the tool body 2, such that the axially foremost point 21 of each individual cutting insert 20, as seen in a reference direction D1 from the rear end 2b of the tool body 2 towards the front end 2a of the tool body in parallel with the centre axis 4 of the tool body, is located in level with the axially foremost point 21 of each one of the other cutting inserts 20, within manufacturing tolerances, when the cutting inserts 20 are mounted in the insert seats 10. The axially foremost point 21 of each cutting insert 20 forms part of a secondary cutting edge 22 of the cutting insert and each cutting insert also has a primary cutting edge 23 located at the side of the secondary cutting edge 22 and radially outward thereof as seen in relation to the centre axis 4 of the tool body 2.

The front part 2c of the tool body 2 is also provided with several burnishing assemblies 30, wherein the number of burnishing assemblies 30 in the tool body 2 is the same as the number of the above-mentioned insert seats 10. Thus, in the illustrated embodiment, four burnishing assemblies 30 are arranged in the tool body 2. The insert seats 10 and the burnishing assemblies 30 are alternately arranged in the circumferential direction of the tool body 2 such that each one of the insert seats 10 is followed by an associated one of the burnishing assemblies 30 as seen in the intended direction of rotation R of the tool body 2, which also implies that one burnishing assembly 30 is arranged between every two consecutive insert seats 10 and consequently also between every two consecutive cutting inserts 20. Thus, a burnishing assembly 30 follows after each cutting insert 20, as seen in the direction of rotation R of the tool body 2.

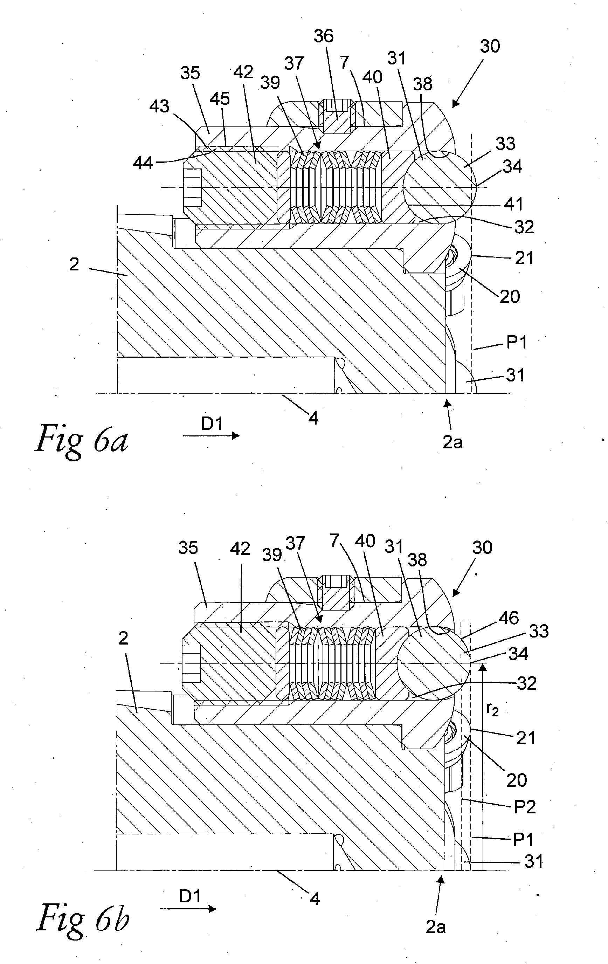

Each burnishing assembly 30 comprises a burnishing element 31, which is partly received in a chamber 32 (see figs 6a and 6b) of the burnishing assembly 30 and has an outwardly bulging end part 33 that projects from the chamber 32 and forwards from the tool body 2 as seen in the above-mentioned reference direction D1. Thus, said end part 33 projects in the axial direction of the tool body 2 beyond the front end 2a thereof. The end part 33 ends in a rounded tip 34 that constitutes the axially foremost point of the burnishing element 31 as seen in the reference direction D1. In the illustrated embodiment, each burnishing assembly 30 comprises a cylindrical housing 35, which is mounted in an associated recess 7 in the tool body 2 and which is fixed in position in this recess 7 by means of a locking member 36 in the form of a screw. In this case, the chamber 32 of the burnishing assembly 30 is provided in the housing 35. However, the chamber 32 may as an alternative be formed directly in the tool body 2.

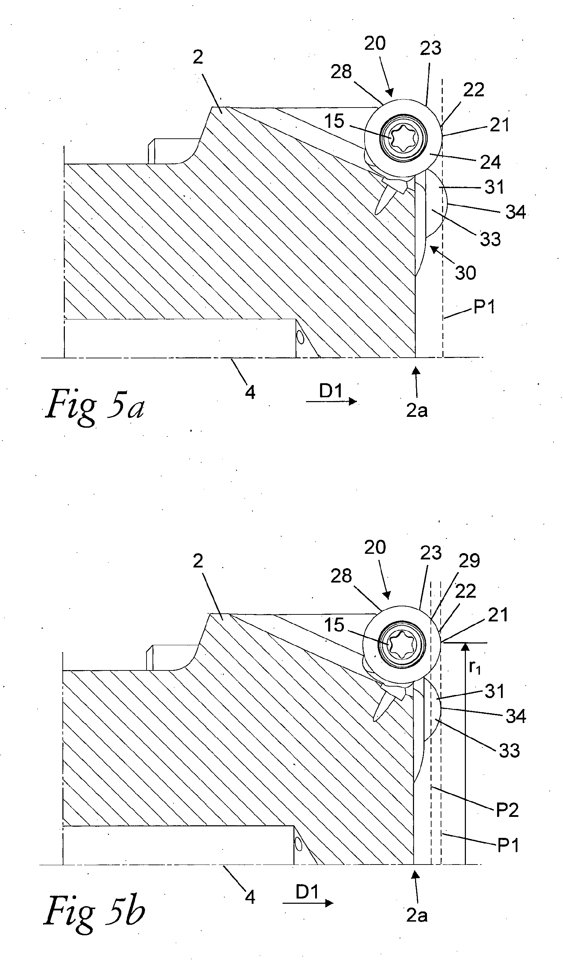

A spring unit 37 is provided in the chamber 32 of each burnishing assembly 30 and configured to urge the burnishing element 31 forwards in the reference direction D1. The burnishing element 31 is, against the action of a spring force from the spring unit 37, moveable inwards in the chamber 32 in a direction opposite to the reference direction D1 from an advanced position (see Figs 5a and 6a), in which the burnishing element 31 rests against a dedicated seat 38 at a front end of the chamber 32 and in which said end part 33 of the burnishing element 31 projects in the reference direction D1 beyond a .reference plane P1 that extends perpendicularly to the centre axis 4 of the tool body 2 and contains the axially foremost point 21 of the secondary cutting edge 22 of each cutting insert 20, to a retracted position (see Figs.5b and 6b), in which the tip 34 of the burnishing element 31 is on a level with said reference plane P1.

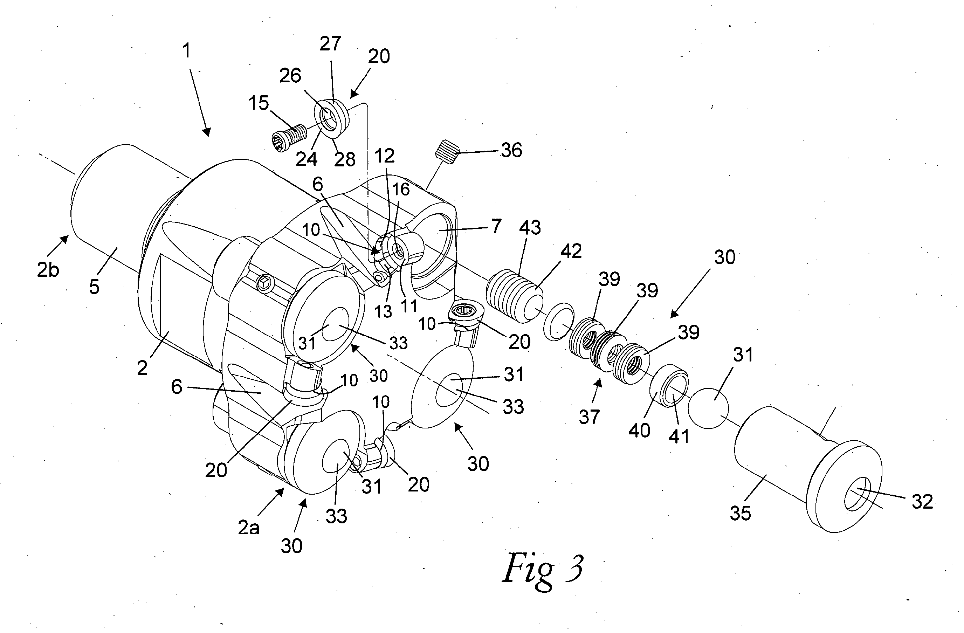

The spring unit 37 of each burnishing assembly 30 is with advantage formed by a stack of disc springs 39, as illustrated in Figs 3, 6a and 6b, but any other suitable type of springs may also be used.

The end part 33 of the burnishing element 31 of each burnishing assembly 30 has preferably a spherical shape, but could as an alternative have any other suitable convex shape.

In the illustrated embodiment, the burnishing element 31 of each burnishing assembly 30 is spherical, wherein each burnishing assembly 30 comprises a support member 40 slidably received in the chamber 32 of the burnishing assembly. In this case, the burnishing element 31 rotatably rests against a burnishing element seat 41 in the associated support member 40, wherein the burnishing element seat 41 preferably has a concave shape adapted to the spherical shape of the burnishing element 31. In the illustrated embodiment, the spring unit 37 of the burnishing assembly 30 is fitted between the support member 40 and a stop member 42 of the burnishing assembly 30, wherein the stop member 42 has an external thread 43 that is in threaded engagement with an internal thread 44 in a hole 45 connected to the chamber 32 of the burnishing assembly. In the illustrated example, said hole 45 is provided at a rear end of the cylindrical housing 35, wherein the above-mentioned seat 38 is provided at a front end of the housing 35.

When the face milling cutter 1 is pressed against a workpiece surface, the outwardly bulging end part 33 of the burnishing element 31 of each burnishing assembly 30 makes contact with the workpiece surface via its rounded tip 34, wherein the burnishing element 31 is pressed inwards in the associated chamber 32 against the action of the spring unit 37 to the retracted position illustrated in Fig 6b, in which the tips 34 of the burnishing elements 31 are all on a level with the axially foremost points 21 of the cutting inserts 20 and consequently on a level with the reference plane P1.

In the illustrated embodiment, the front part 2c of the tool body 2 has a periphery 9 with first periphery areas 9a that bulge radially outwards at the portions of the front part 2c where the burnishing assemblies 30 are accommodated and intermediate second periphery areas 9b located between the first periphery areas 9a, wherein the second periphery areas 9b are located closer to the centre axis 4 of the tool body 2 than the first periphery areas 9a. The chip pockets 6 are formed as recesses in the second periphery areas 9b, which implies that the radial depth of the chip pockets 6 may remain rather small also when the radial dimension of the front part 2c of the tool body 2 has to be increased locally in order to accommodate the burnishing assemblies 30, which in its turn is favourable with respect to the chip evacuation from the chip pockets 6. By arranging the chip pockets 6 in portions of the front part 2c of the tool body 2 where the periphery is substantially unaffected by the radial position of the burnishing assemblies 30, it will be possible to give the burnishing assemblies 30 a suitable radial position in the tool body 2 without any negative effects on the chip evacuation.

In the illustrated embodiments, each cutting insert 20 is releasably fixed to the associated insert seat 10 by means of a fastening element 15 in the form of a screw, which extends through a through hole 26 in the cutting insert 20 and is engaged in a threaded hole 16 (see Fig 3) in a tangential support surface 11 in the insert seat 10. The insert seat 10 is also provided with two side support surfaces 12, 13 for supporting the cutting insert 20 when mounted in the insert seat 10.

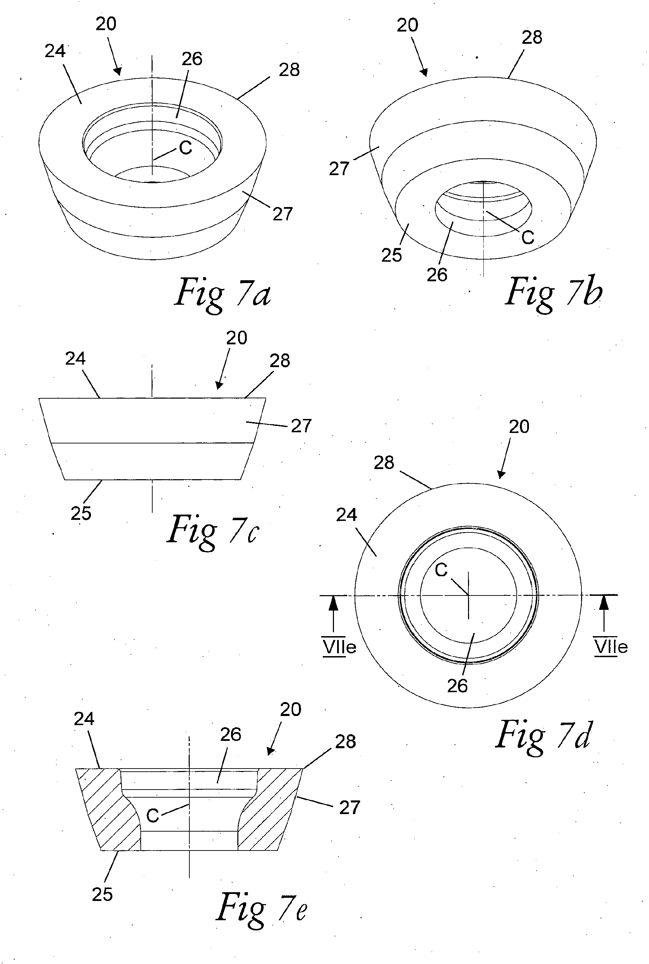

The cutting inserts 20 are all geometrically identical to each other, or at least substantially geometrically identical to each other. Thus, the cutting inserts 20 have the same shape. The cutting inserts 20 illustrated in Figs 1-6 are of the type illustrated in closer detail in Figs 7a-7e but may of course also be designed in any other suitable manner.

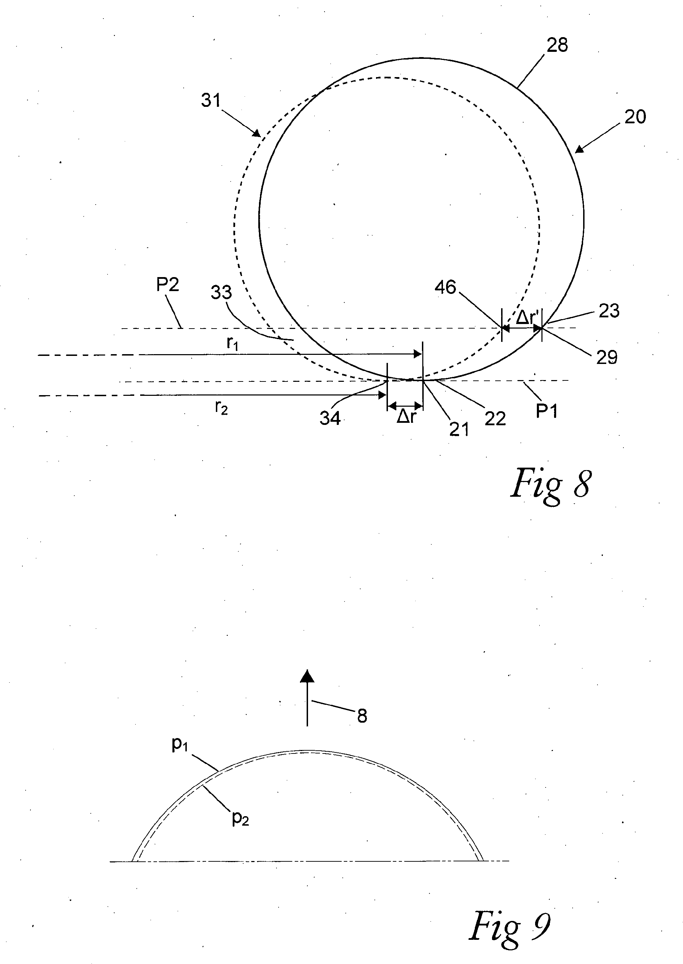

The cutting insert 20 illustrated in Figs 7a-7e has a round basic shape and is rotatable into different working positions. Thus, the cutting insert 20 may be mounted in different rotary positions, i.e. different indexing position, in the associated insert seat 10. The cutting insert 20 comprises a rake face 24 and an abutment face 25 arranged on opposite sides of the cutting insert and serving as top and bottom faces of the cutting insert. When mounted in the associated insert seat 10, the cutting insert 20 is configured to abut against the tangential support surface 11 in the insert seat via the abutment face 25. The cutting insert 20 has a centre axis C, which extends between the rake face 24 and the abutment face 25. The cutting insert 20 is provided with a through hole 26, which extends centrally through the cutting insert between the rake face 24 and the abutment face 25. The centre axis C of the cutting insert coincides with the centre axis of the through hole 26. A peripheral surface 27, which constitutes the relief surface of the cutting insert, extends around the cutting insert between the rake face 24 and the abutment face 25. A substantially circular cutting edge 28 extends along the periphery of the rake face 24 and is formed at an intersection between the peripheral surface 27 and the rake face 24. The above-mentioned primary cutting edge 23 and secondary cutting edge 22 form part of this substantially circular cutting edge 28. In the embodiment illustrated in Figs 1-6, the spherical end part 33 of the burnishing elements 31 has a radius of curvature that is substantially equal to the radius of the substantially circular cutting edge 28. However, the spherical end part 33 of the burnishing elements 31 may with advantage have a radius of curvature that is smaller than the radius of the substantially circular cutting edge 28, as schematically illustrated in Fig 8.

When mounted in any of the insert seats 10, the cutting insert 20 illustrated in Figs 7a-7e is so arranged that the abutment face 25, or at least a portion thereof, abuts against the tangential support surface 11 in the insert seat in question and two parts of the peripheral surface 27 abut against a respective one of the side support surfaces 12, 13 in the insert seat in question.

The cutting inserts 20 are all positioned with the axially foremost point 21 of the secondary cutting edge 22 at the substantially same radial distance r₁ from the centre axis 4 of the tool body 2. In the following, this radial distance r₁ is referred to as the first radial distance. The burnishing elements 31 are all positioned with the axially foremost point 34 at the substantially same radial distance r₂ from the centre axis 4 of the tool body 2. In the following, this radial distance r₂ is referred to as the second radial distance. The burnishing element 31 of each burnishing assembly 30 is located closer to the centre axis 4 of the tool body 2 than the axially foremost point 21 of the secondary cutting edge 22 of each cutting insert 20 such that there is a radial distance Δr between the axially foremost point 34 of the burnishing element 31 of each burnishing assembly and the axially foremost point 21 of the secondary cutting edge 22 of each cutting insert. Thus, the second radial distance r₂ is smaller than the first radial distance r₁. In every plane P2 that is parallel with the reference plane P1 and intersects the above-mentioned end part 33 of each burnishing element 31, there is a radial distance Δr' between a radially outermost point 46 of each burnishing element 31 and a radially outermost point 29 of each cutting insert 20, as illustrated in Fig 8, wherein Δr'≥Δr in each such plane P2 as seen when the burnishing element 31 of each burnishing assembly 30 is in the above-mentioned retracted position. The radially outermost point of a burnishing element 31 in the plane P2 refers to the point 46 of the burnishing element 31 that is located at the longest distance from the centre axis 4 of the tool body 2 in this plane P2. In the corresponding manner, the radially outermost point of a cutting insert 20 in the plane P2 refers to the point 29 of the cutting insert 20 that is located at the longest distance from the centre axis 4 of the tool body 2 in this plane P2.

As mentioned above, the insert seats 10 are evenly or at least substantially evenly distributed about the centre axis 4 of the tool body 2, which implies that the cutting inserts 20 received in the insert seats 10, and thereby also the axially foremost points 21 of the cutting inserts, are evenly or at least substantially evenly distributed about the centre axis 4 of the tool body 2 with an equal angular distance between every two consecutive cutting inserts 20. In the corresponding manner, the burnishing elements 31 are evenly or at least substantially evenly distributed about the centre axis 4 of the tool body 2.

During the performance of a face milling operation, the tool body 2 is rotated about the axis of rotation 3 while being moved along a surface on a workpiece in a feeding direction perpendicular to the axis of rotation 3. The cutting inserts 20 and burnishing elements 31 are to be so positioned in relation to each other in the tool body 2 that the tip 34 of a burnishing element 31 will move along a path p₂ close to the path p₁ of the axially foremost point 21 of the secondary cutting edge 22 of the associated cutting insert 20, as schematically illustrated in Fig 9. In Fig 9, the above-mentioned feeding direction is illustrated by the arrow 8. Fig 9 only illustrates a respective section of said paths p₁, p₂ at the leading end of the tool body 2, as seen in the feeding direction 8. It is desirable to make sure that each burnishing element 31, during the performance of a face milling operation, is kept out of contact with any part of the milled surface on the workpiece that has still not been machined by the secondary cutting edge 22 of any of the cutting inserts 20.

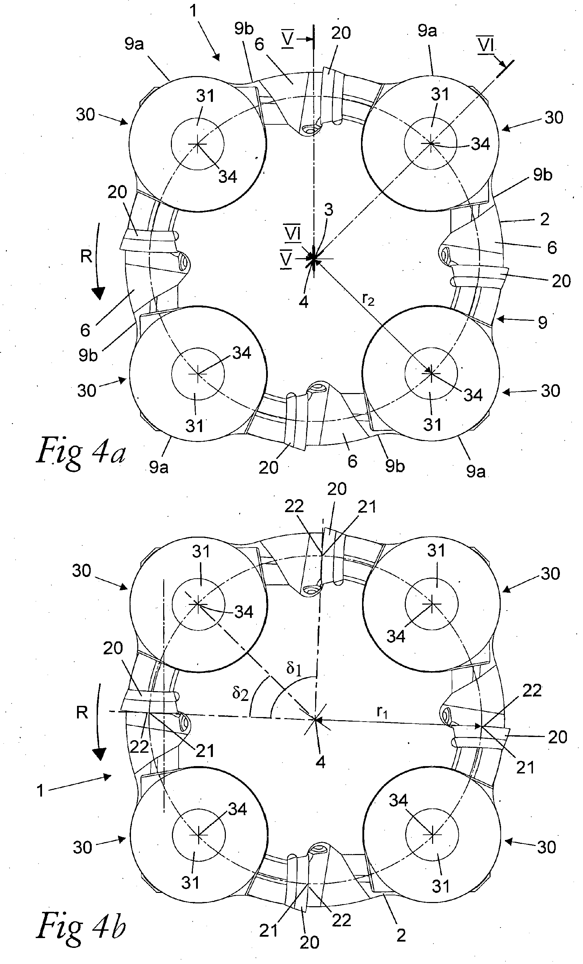

According to a first alternative, the cutting inserts 20 and burnishing elements 31 are so positioned in the tool body 2 that the above-mentioned radial distance Δr between the axially foremost point 34 of each burnishing element 31 and the axially foremost point 21 of the secondary cutting edge 22 of each cutting insert 20 is smaller than or equal to f_{z}^{max}·(δ₂/δ₁), where:
- f_{z}^{max} is the recommended maximum feed per tooth for the face milling cutter 1,
- δ₁ is the angular distance, as seen from the centre axis 4 of the tool body 2, between the axially foremost point 21 of the secondary cutting edge 22 of every two consecutive cutting inserts 20, as illustrated in Fig 4b, and
- δ₂ is the angular distance, as seen from the centre axis 4 of the tool body 2, between the axially foremost point 21 of the secondary cutting edge 22 of each cutting insert 20 and the axially foremost point 34 of the burnishing element 31 of the burnishing assembly 30 located directly after the cutting insert 20 as seen in the intended direction of rotation R of the tool body 2.

According to another alternative, the cutting inserts 20 and burnishing elements 31 are so positioned in the tool body 2 that the above-mentioned radial distance Δr between the axially foremost point 34 of each burnishing element 31 and the axially foremost point 21 of the secondary cutting edge 22 of each cutting insert 20 is in the range from f_{z}^{max}·(δ₂/δ₁) to f_{z}^{max}·(δ₂/δ₁), i.e. f_{z}^{max}·(δ₂/δ₁) ≤ Δr ≤ f_{z}^{max}·(δ₂/δ₁), where fz^{max}, δ₁ and δ₂ are as defined above and where f_{z}^{min} is the recommended minimum feed per tooth for the face milling cutter 1.

According to a further alternative, the cutting inserts 20 and burnishing elements 31 are so positioned in the tool body 2 that the above-mentioned radial distance Δr between the axially foremost point 34 of each burnishing element 31 and the axially foremost point 21 of the secondary cutting edge 22 of each cutting insert 20 is in the range from 0.05·(δ₂/δ₁) millimetre to 0,5·(δ₂/δ₁) millimetre, i.e. 0.05·(δ₂/δ₁) mm ≤ Δr ≤ 0.05·(δ₂/δ₁) mm, where δ₁ and δ₂ are as defined above.

The invention is of course not in any way restricted to the embodiments described above. On the contrary, many possibilities to modifications thereof will be apparent to a person with ordinary skill in the art without departing from the basic idea of the invention such as defined in the appended claims.

## Claims

1. A face milling cutter (1) comprising:
- a tool body (2) having a front end (2a) and an opposite rear end (2b), the rear end (2b) being configured for attachment to a machine, wherein a longitudinal centre axis (4) of the tool body (2) extends between the rear end (2b) and the front end (2a) of the tool body (2);
- at least two cutting inserts (20) for forming a milled flat surface on a workpiece;
- at least two insert seats (10) provided in the tool body (2) and distributed in the circumferential direction of the tool body, the at least two insert seats (10) being configured to accommodate a respective one of the at least two cutting inserts (20), wherein each cutting insert (20) of the at least two cutting inserts, when mounted in the associated insert seat (10), has a secondary cutting edge (22) that constitutes the axially foremost cutting edge of the cutting insert (20), as seen in a reference direction (D1) from the rear end (2b) of the tool body towards the front end (2a) of the tool body in parallel with the centre axis (4) of the tool body; and
- several burnishing assemblies (30) arranged in the tool body (2), each burnishing assembly (30) comprising:
• a burnishing element (31), which is partly received in a chamber (32) of the burnishing assembly (30) and has an outwardly bulging end part (33) that projects from the chamber (32) and forwards from the tool body (2) as seen in said reference direction (D1), wherein this end part (33) ends in a rounded tip (34) that constitutes the axially foremost point of the burnishing element (31) as seen in said reference direction (D1); and
• a spring unit (37) provided in said chamber (32), wherein the burnishing element (31) against the action of a spring force from the spring unit (37) is moveable inwards in the chamber (32) in a direction opposite to said reference direction (D1) from an advanced position, in which the burnishing element (31) rests against a dedicated seat (38) in the chamber (32) and in which said end part (33) of the burnishing element (31) projects in said reference direction (D1) beyond a reference plane (P1) that extends perpendicularly to the centre axis (4) of the tool body (2) and contains or substantially contains an axially foremost point (21) of the secondary cutting edge (22) of each one of the at least two cutting inserts (20); to a retracted position, in which said tip (34) of the burnishing element (31) is on a level with said reference plane (P1),
**characterized in that** the number of the several burnishing assemblies (30) in the tool body (2) is the same as the number of the at least two insert seats (10), wherein the at least two insert seats (10) and the several burnishing assemblies (30) are alternately arranged in the circumferential direction of the tool body (2) such that each one of the at least two insert seats (10) is followed by an associated one of the several burnishing assemblies (30) as seen in the intended direction of rotation (R) of the tool body (2).

2. A face milling cutter according to claim 1, **characterized in:**
- **that** each cutting insert (20) of said at least two cutting inserts comprises:
• a rake face (24) and an abutment face (25) arranged on opposite sides of the cutting insert (20), wherein the cutting insert (20) when mounted in the associated insert seat (10) is configured to abut against a tangential support surface (11) in the insert seat via the abutment face (25),
• a peripheral surface (27) extending around the cutting insert (20) between the rake face (24) and the abutment face (25), and
• a substantially circular or substantially arc-shaped cutting edge (28) formed at an intersection between the peripheral surface (27) and the rake face (24), wherein said secondary cutting edge (22) of the cutting insert (20) forms part of this substantially circular or substantially arc-shaped cutting edge (28); and
- **that** said end part (33) of the burnishing element (31) of each burnishing assembly (30) has a spherical shape with a radius of curvature substantially equal to or smaller than a radius of the substantially circular or substantially arc-shaped cutting edge (28) of the cutting inserts.

3. A face milling cutter according to claim 1 or 2, **characterized in that** said at least two cutting inserts (20) are all positioned with the axially foremost point (21) of the secondary cutting edge (22) at the substantially same radial distance (r₁) from the centre axis (4) of the tool body (2), wherein the axially foremost point (34) of the burnishing element (31) of each burnishing assembly (30) of the several burnishing assemblies (30) is located closer to the centre axis (4) of the tool body (2) than the axially foremost point (21) of the secondary cutting edge (22) of each cutting insert (20) of the at least two cutting inserts (20) such that there is a radial distance Δr between the axially foremost point (34) of the burnishing element (31) of each burnishing assembly (30) of the several burnishing assemblies (30) and the axially foremost point (21) of the secondary cutting edge (22) of each cutting insert (20) of the at least two cutting inserts (20).

4. A face milling cutter according to claim 3, **characterized in:**
- **that** said at least two insert seats (10) are evenly or at least substantially evenly distributed about the centre axis (4) of the tool body (2);
- **that** the burnishing elements (31) of said several burnishing assemblies (30) are evenly or at least substantially evenly distributed about the centre axis (4) of the tool body (2); and
- **that** 0 < Δr ≤ f_{z}^{max}·(δ₂/δ₁), where
f_{z}^{max} is the recommended maximum feed per tooth for the face milling cutter (1),
δ₁ is the angular distance, as seen from the centre axis (4) of the tool body (2), between the axially foremost point (21) of the secondary cutting edge (22) of every two consecutive cutting inserts (20) of said at least two cutting inserts, and
δ₂ is the angular distance, as seen from the centre axis (4) of the tool body (2), between the axially foremost point (21) of the secondary cutting edge (22) of each cutting insert (20) and the axially foremost point (34) of the burnishing element (31) of the burnishing assembly (30) located directly after the cutting insert (20) as seen in the intended direction of rotation (R) of the tool body (2).

5. A face milling cutter according to claim 3, **characterized in:**
- **that** said at least two insert seats (10) are evenly or at least substantially evenly distributed about the centre axis (4) of the tool body (2);
- **that** the burnishing elements (31) of said several burnishing assemblies (30) are evenly or at least substantially evenly distributed about the centre axis (4) of the tool body (2); and
- **that** f_{z}^{max}·(δ₂/δ₁) ≤ Δr ≤ f_{z}^{max}·(δ₂/δ₁), where
f_{z}^{min} is the recommended minimum feed per tooth for the face milling cutter (1),
f_{z}^{max} is the recommended maximum feed per tooth for the face milling cutter (1),
δ₁ is the angular distance, as seen from the centre axis (4) of the tool body (2), between the axially foremost point (21) of the secondary cutting edge (22) of every two consecutive cutting inserts (20) of said at least two cutting inserts, and
δ₂ is the angular distance, as seen from the centre axis (4) of the tool body (2), between the axially foremost point (21) of the secondary cutting edge (22) of each cutting insert (20) and the axially foremost point (34) of the burnishing element (31) of the burnishing assembly (30) located directly after the cutting insert (20) as seen in the intended direction of rotation (R) of the tool body (2).

6. A face milling cutter according to claim 3, **characterized in:**
- **that** said at least two insert seats (10) are evenly or at least substantially evenly distributed about the centre axis (4) of the tool body (2);
- **that** the burnishing elements (31) of said several burnishing assemblies (30) are evenly or at least substantially evenly distributed about the centre axis (4) of the tool body (2); and
- **that** 0.05·(δ₂/δ₁) mm ≤ Δr ≤ 0.5·(δ₂/δ₁) mm, where
δ₁ is the angular distance, as seen from the centre axis (4) of the tool body (2), between the axially foremost point (21) of the secondary cutting edge (22) of every two consecutive cutting inserts (20) of said at least two cutting inserts, and
δ₂ is the angular distance, as seen from the centre axis (4) of the tool body (2), between the axially foremost point (21) of the secondary cutting edge (22) of each cutting insert (20) and the axially foremost point (34) of the burnishing element (31) of the burnishing assembly (30) located directly after the cutting insert (20) as seen in the intended direction of rotation (R) of the tool body (2).

7. A face milling cutter according to any of claims 3-6, **characterized in that** in every plane (P2) that is parallel with said reference plane (P) and intersects said end part (33) of the burnishing element (31) of each burnishing assembly (30), there is a radial distance Δr' between a radially outermost point (46) of the burnishing element (31). of each burnishing assembly (30) and a radially outermost point (29) of each cutting insert (20), wherein Δr'≥Δr in each such plane (P2) as seen when the burnishing element (31) of each burnishing assembly (30) is in said retracted position.

8. A face milling cutter according to any of claims 1-7, **characterized in that** the burnishing element (31) of each burnishing assembly (30) is spherical.

9. A face milling cutter according to claim 8, **characterized in that** each burnishing assembly (30) comprises a support member (40) slidably received in the chamber (32) of the burnishing assembly (30), wherein the burnishing element (31) of the burnishing assembly (30) rotatably rests against a burnishing element seat (41) in the support member (40).

10. A face milling cutter according to claim 9, **characterized in that** said burnishing element seat (41) has a concave shape adapted to the spherical shape of the associated burnishing element (31).

11. A face milling cutter according to claim 9 or 10, **characterized in that** the spring unit (37) of each burnishing assembly (30) is fitted between the support member (40) of the burnishing assembly (30) and a stop member (42) of the burnishing assembly (30), wherein the stop member (42) has an external thread (43) that is in threaded engagement with an internal thread (44) in a hole (45) connected to the chamber (32) of the burnishing assembly (30).

12. A face milling cutter according to any of claims 1-11, **characterized in that** the spring unit (37) of each burnishing assembly (30) is formed by a stack of disc springs (39).

13. A face milling cutter according to any of claims 1-12, **characterized in that** the number of said insert seats (10) in the tool body (2) is three or more, preferably four or more.

14. A method for face milling of a workpiece, wherein the face milling of the workpiece is carried out by means of a face milling cutter (1) according to any of claims 1-13.

15. A method for face milling of a workpiece according to claim 14, wherein the workpiece is of heat resistant material, such as titanium or its alloys, high strength steel, Inconel 718, Waspaloy, martensitic stainless steel, tantalum or its alloys, nickel or its alloys, molybdenum or its alloys, chromium molybdenum alloys, stainless steel, 602A alloy or the similar.

16. A method for face milling of a workpiece according to claim 14 or 15, wherein the workpiece is an aeronautic or aerospace component such as landing gear beams, thrust fittings, pylon brackets, engine mounts, etc., or a component for energy industries.
